Europäisches Patentamt

European Patent Office

Office européen des brevets

(11) Veröffentlichungsnummer: **0 308 610 B1**

## EUROPÄISCHE PATENTSCHRIFT

(45) Veröffentlichungstag der Patentschrift: **06.05.92**

(21) Anmeldenummer: **88111589.3**

(22) Anmeldetag: **19.07.88**

(51) Int. Cl.⁵: **G11B 17/30**, G11B 17/22

(54) Vorrichtung zur Entnahme und zum Abspielen eines plattenförmigen Aufzeichnungsträgers aus den Fächern eines Magazins.

(30) Priorität: **27.08.87 DE 3728587**

(43) Veröffentlichungstag der Anmeldung:
**29.03.89 Patentblatt 89/13**

(45) Bekanntmachung des Hinweises auf die
Patenterteilung:
**06.05.92 Patentblatt 92/19**

(84) Benannte Vertragsstaaten:
**AT BE CH DE ES FR GB GR IT LI LU NL SE**

(56) Entgegenhaltungen:
**EP-A- 0 109 711**
**EP-A- 0 138 005**
**EP-A- 0 163 463**
**FR-A- 2 522 182**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Caspers, Johannes
An der Kapelle 1
W-7730 Villingen-Schwenningen(DE)**

EP 0 308 610 B1

## Beschreibung

Die Erfindung betrifft eine Vorrichtung zur Entnahme und zum Abspielen eines plattenförmigen Aufzeichnungsträgers aus den Fächern eines Magazins, an dessen Entnahmeseite die Vorrichtung aufzugsartig auf- und abbewegbar ist.

Es sind CD-Spieler bekannt, bei denen eine derartige Vorrichtung zur Entnahme und zum Abspielen einer CD-Platte mittels einer Spindel auf jeder Seite wie ein Aufzug auf- und abbewegbar ist. Zur Entnahme einer gewünschten CD-Platte fährt die Vorrichtung mittels der zwei Spindeln auf die Höhe des Fachs, in dem die gewünschte CD-Platte liegt. Anschließend wird diese gewünschte CD-Platte entnommen, in die Abspielposition gebracht und abgespielt. Zum Abspielen wird die Vorrichtung bei den meisten CD-Spielern abgesenkt.

Andere CD-Spieler sind anstelle zweier Spindeln mit zwei Kulissen oder mit zwei Zahnstangen und mehreren Zahnrädern ausgestattet, mittels denen die Vorrichtung aufzugsartig auf- und abbewegt wird.

Aus der EP-A 0 138 005 sind ein Plattenmagazin und eine Vorrichtung zur Entnahme von Platten aus dem Magazin für einen Wechselspieler bekannt. Auf der Entnahmeseite des Magazins mit Fächern, in denen die Platten aufbewahrt werden, ist die Entnahmevorrichtung wie ein Lift auf- und abbewegbar, damit sie vor jedem Fach des Magazins positioniert werden kann. Auf einer Seite der Entnahmevorrichtung ist eine vertikale Führungsstange vorgesehen, welche die Entnahmevorrichtung senkrecht führt. Damit sich die Entnahmevorrichtung nicht um die Führungsstange drehen kann, verläuft neben der Führungsstange eine zweite vertikale Führungsstange, auf der eine Klemmvorrichtung gleiten kann, die an der Entnahmevorrichtung befestigt ist. Rechts von der ersten Führungsstange ist eine vertikale Gleitschiene angeordnet, auf der ein Gegengewicht zur Entnahmevorrichtung sitzt. Das Gegengewicht ist am Seil eines Seilzuges befestigt, der im Inneren der ersten Führungsstange und der Gleitschiene verläuft.

Ein Nachteil dieser Entnahmevorrichtung liegt nun darin, daß sie leicht verkanten kann, weil die den Führungsstangen und der Gleitschiene abgewandte Seite der Entnahmevorrichtung frei schwebt.

Es ist daher Aufgabe der Erfindung, eine Vorrichtung zur Entnahme und zum Abspielen eines plattenförmigen Aufzeichnungsträgers aus den Fächern eines Magazins anzugeben, die kaum Störgeräusche erzeugt, nur wenig Platz in Anspruch nimmt und trotzdem sicher ohne die Gefahr des Verkantens aufzugsartig auf- und abbewegbar ist.

Die Erfindung löst diese Aufgabe dadurch, daß auf der dem Antrieb gegenüberliegenden Seite eine Feder zur Abstützung der Vorrichtung vorgesehen ist.

Anhand des in den Figuren abgebildeten Ausführungsbeispieles wird die Erfindung nun beschrieben und erläutert.

Es zeigen

Figur 1      die Seitenansicht eines Ausführungsbeispieles der erfindungsgemäßen Vorrichtung im Zusammenwirken mit einem Magazin

Figur 2      die Vorderansicht dieses Ausführungsbeispieles im Zusammenwirken mit dem Magazin

Figur 3      die Draufsicht dieses Ausführungsbeispieles im Zusammenwirken mit dem Magazin.

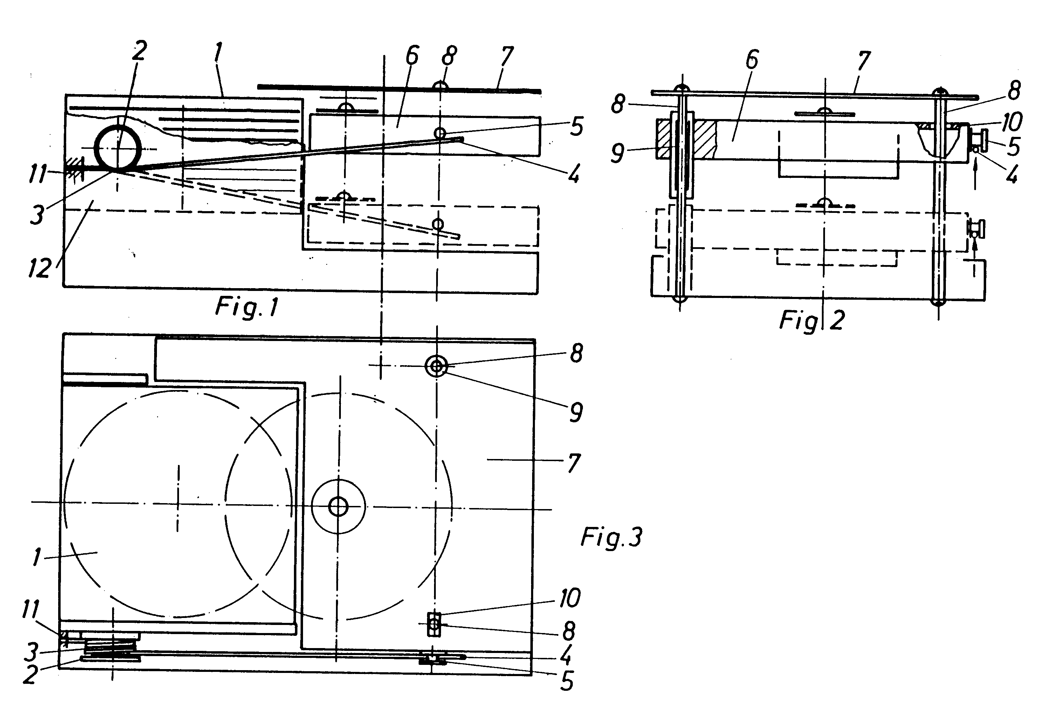

In der Figur 1 ist diejenige Seite der erfindungsgemäßen Vorrichtung dargestellt, auf der die Feder zur Abstützung der Vorrichtung vorgesehen ist. Der Antrieb der Vorrichtung ist der Einfachheit halber nicht eingezeichnet.

Ein Gehäuse 12 zur Aufnahme eines Magazins 1 mit mehreren Fächern für CD-Platten ist mit einem Zapfen 2 versehen, um den eine Torsionsfeder 3 gewickelt ist und mittels einer Verankerung 11 festgehalten wird. Die Torsionsfeder 3 ist als Feder mit einem langen Arm 4 ausgeführt, auf der mittels eines Zapfens 5 die Vorrichtung 6 zur Entnahme und zum Abspielen einer CD- Platte ruht. Die Vorrichtung befindet sich in der Entnahmeposition für die oberste CD-Platte des Magazins 1. Ihre Entnahmeposition für die unterste CD-Platte des Magazins 1 ist gestrichelt eingezeichnet. Eine Deckplatte 7 schließt die Vorrichtung 6 nach oben hin ab.

In der Figur 2 ist die Vorderansicht der Vorrichtung 6 gezeigt. Der lange Arm 4 der Torsionsfeder 3 stützt - wie durch den Pfeil angedeutet ist - über den Zapfen 5 die Vorrichtung 6 ab. Zwei Führungsstangen 8 bewirken eine parallele Führung ohne Verkanten beim aufzugsartigen Auf- und Abbewegen der Vorrichtung 6, wenn CD-Platten aus den einzelnen Fächern des Magazins 1 entnommen werden. Auf der dem Antrieb zugeordneten Seite ist die Vorrichtung 6 mittels eines Führungsrohres 9 mit kreisförmigem Querschnitt auf der Führungsstange 8 geführt, während sie auf der Seite mit der Torsionsfeder 3 mittels eines Längsschlitzes 10 auf der Führungsstange 8 geführt ist, weil auf der Seite der Torsionsfeder 3 eine nur seitliche Führung vorteilhafter ist. Die Entnahmeposition der Vorrichtung 6 für die oberste CD-Platte des Magazins 1 ist mit durchgezogenen Linien, die Entnahmeposition für die unterste CD-Platte dagegen wie in Figur 1 gestrichelt gezeichnet.

In der in Figur 3 dargestellten Draufsicht ist gezeigt, daß der Zapfen 2 des Gehäuses 12 ebenso wie der Zapfen 5 der Vorrichtung 6 mit einer Nut für die Torsionsfeder 3 versehen ist, damit die Torsionsfeder 3 bzw. ihr langer Arm 4 nicht vom Zapfen 2 bzw. 5 abrutschen kann. Mehrere Windungen der Torsionsfeder 3 sind auf den Zapfen 2 gewickelt. Mittels der Ankervorrichtung 11 wird die Torsionsfeder 3 festgehalten.

Als Antrieb, welcher der übersichtlichkeit wegen in keiner der Figuren eingezeichnet ist, kann z.B. eine Zahnstange mit Zahnrädern, eine Spindel, ein Riemen oder eine Kulisse vorgesehen sein. Weil nur auf einer Seite der Antrieb vorgesehen ist, werden nicht nur halb so viele Zahnräder, Zahnstangen, Kulissen, Riemen usw. benötigt, sondern die Störgeräusche bei laufendem Antrieb nehmen ebenfalls um etwa 50 % ab, denn die Anzahl der geräuscherzeugenden Bauteile ist um die Hälfte verringert. Weil anstelle des zweiten Antriebs eine Feder vorgesehen ist, kann die erfindungsgemäße Vorrichtung in schmalerer Bauweise ausgeführt werden. Die Feder ist so dimensioniert, daß sie die Vorrichtung stets mit der gleichen Kraft abstützt, die dem halben Gewicht der Vorrichtung entspricht. Innerhalb des Auslenkungsbereiches kann die Federkraft der Torsionsfeder 3 wegen ihres langen Arms 4 als annäherend konstant betrachtet werden.

Anstelle der Lösung mit einer Torsionsfeder sind weitere Lösungen mit anderen Federtypen denkbar, jedoch ist die Lösung mit der Torsionsfeder am einfachsten und billig herzustellen. Ausserdem benötigt sie nur wenig Platz, so daß die erfindungsgemäße Vorrichtung und das Magazin in schmaler Bauweise ausführbar sind.

Die Erfindung ist für CD-Spieler, Draw-Disc-Spieler, Videoplattenspieler und magneto-optische Geräte besonders gut geeignet.

**Patentansprüche**

1. Vorrichtung (6) zur Entnahme und zum Abspielen eines plattenförmigen Aufzeichnungsträgers (CD) aus den Fächern eines Magazins (1), an dessen Entnahmeseite die Vorrichtung (6) aufzugsartig auf- und abbewegbar ist, wobei auf einer Seite der Vorrichtung (6) ein Antrieb vorgesehen ist, **dadurch gekennzeichnet,** daß auf der dem Antrieb gegenüberliegenden Seite eine Feder (3) zur Abstützung der Vorrichtung (6) vorgesehen ist.

2. Vorrichtung nach Anspruch 1, **dadurch gekennzeichnet,** daß eine Feder (3) vorgesehen ist, deren Federkraft in einem vorgebbaren Auslenkungsbereich weitgehend unabhängig von der Auslenkung ist.

3. Vorrichtung nach Anspruch 2, **dadurch gekennzeichnet,** daß eine Torsionsfeder (3) mit langem Arm (4) vorgesehen ist.

4. Vorrichtung nach Anspruch 3, **dadurch gekennzeichnet,** daß an einem Gehäuse (12), in dem das Magazin (1) untergebracht ist, ein Zapfen (2) vorgesehen ist, um den die Windungen der Torsionfeder (3) gewickelt sind.

5. Vorrichtung nach Anspruch 3 oder 4, **dadurch gekennzeichnet,** daß der lange Arm (4) der Torsionsfeder (3) die Vorrichtung (6) abstützt.

6. Vorrichtung nach Anspruch 5, **dadurch gekennzeichnet,** daß an der Vorrichtung (6) ein Zapfen (5) vorgesehen ist, der auf dem Ende des langen Arms (4) der Torsionsfeder (3) aufliegt.

7. Vorrichtung nach Ansrpuch 4, **dadurch gekennzeichnet,** daß der am Gehäuse (12) angebrachte Zapfen (2) mit einer Nut versehen ist, damit die Torsionsfeder (3) nicht abrutschen kann.

8. Vorrichtung nach Anspruch 6, **dadurch gekennzeichnet,** daß der an der Vorrichtung (6) angebrachte Zapfen (5) miteiner Nut versehen ist, damit der lange Arm (4) der Torsionsfeder (3) nicht abrutschen kann.

9. Vorrichtung nach einem der vorangehenden Ansprüche, **dadurch gekennzeichnet,** daß die Torsionsfeder (3) mittels einer Verankerung (11) festgehalten wird.

10. Vorrichtung nach einem der vorangehenden Ansprüche, **dadurch gekennzeichnet,** daß die Vorrichtung (6) oben durch eine Deckplatte (7) abgeschlossen ist.

11. Vorrichtung nach einem der vorangehenden Ansprüche, **dadurch gekennzeichnet,** daß auf jeder Seite je eine Führungsstange (8) mit einer Führung (9,10) vorgesehen ist.

12. Vorrichtung nach Anspruch 11, **dadurch gekennzeichnet,** daß die auf der Seite des Antriebs liegende Führung (9) als Führungsrohr mit kreisförmigem Querschnitt ausgeführt ist, während die auf der Seite der Torsionsfeder (3) liegende Führung (10) als Längsschlitz (10) ausgeführt ist.

**Claims**

1. A device (6) for removing and playing through a disc-shaped recording medium (CD) from the compartments of a magazine (1), on the removal side of which the device (6) can be moved up and down like a lift, in which on one side of the device (6) a drive is provided, **characterised in that** on the side opposite the drive there is provided a spring (3) for supporting the device (6).

2. A device according to claim 1, **characterised in that** a spring (3) is provided, the spring force of which is largely independent of the excursion in a predeterminable excursion region.

3. A device according to claim 2, **characterised in that** a torsion spring (3) with a long arm (4) is provided.

4. A device according to claim 3, **characterised in that** a spigot (2) is provided on a casing (12) in which the magazine (1) is housed, around which spigot the turns of the torsion spring (3) are wound.

5. A device according to claim 3 or 4, **characterised in that** the long arm (4) of the torsion spring (3) supports the device (6).

6. A device according to claim 5, **characterised in that** a spigot (5) is provided on the device (6), which spigot bears on the end of the long arm (4) of the torsion spring (3).

7. A device according to claim 4, **characterised in that** the spigot (2) arranged on the casing (12) is provided with a groove, so that the torsion spring (3) cannot slip off.

8. A device according to claim 6, **characterised in that** the spigot (5) arranged on the device (6) is provided with a groove, so that the long arm (4) of the torsion spring (3) cannot slip off.

9. A device according to any one of the preceding claims, **characterised in that** the torsion spring (3) is held firm by means of an anchoring (11).

10. A device according to any one of the preceding claims, **characterised in that** the device (6) is closed at the top by a cover plate (7).

11. A device according to any one of the preceding claims, **characterised in that** on each side there is provided a guide rod (8) with a guide (9,10).

12. A device according to claim 11, **characterised in that** the guide (9) located on the side of the drive is implemented as a guide tube with circular cross section, while the guide (10) located on the side of the torsion spring (3) is implemented as a longitudinal slot (10).

**Revendications**

1. Dispositif (6) pour prendre et pour lire un support d'enregistrement en forme de disque (disque compact) dans les casiers d'un magasin (1), le dispositif pouvant être déplacé vers le haut et vers le bas à la manière d'un ascenseur sur son côté prise, un entraînement étant prévu sur un côté du dispositif (6), **caractérisé en ce** qu'un ressort (3) est prévu pour l'appui du dispositif (6) sur le côté opposé à l'entraînement.

2. Dispositif selon la revendication 1, **caractérisé en ce** qu'un ressort (3) est prévu dont la force élastique dans une zone d'excursion qui peut être prédéterminée est indépendante dans une grande mesure de l'excursion.

3. Dispositif selon la revendication 2, **caractérisé en ce** qu'un ressort de torsion (3) avec un bras long (4) est prévu.

4. Dispositif selon la revendication 3, **caractérisé en ce** qu'un tourillon (2) est prévu sur un boîtier (12) dans lequel est logé le magasin (1), tourillon autour duquel sont enroulées les spires du ressort de torsion (3).

5. Dispositif selon la revendication 3 ou 4, **caractérisé en ce** que le bras long (4) du ressort de torsion (3) appuie le dispositif (6).

6. Dispositif selon la revendication 5, **caractérisé en ce** qu'un tourillon (5) est prévu sur le dispositif (6), tourillon qui s'appuie sur l'extrémité du bras long (4) du ressort de torsion (3).

7. Dispositif selon la revendication 4, **caractérisé en ce** que le tourillon (2) fixé au boîtier (12) est pourvu d'une rainure pour que le ressort de torsion (3) ne puisse pas glisser.

8. Dispositif selon la revendication 6, **caractérisé en ce** que le tourillon (5) fixé au dispositif (6) est pourvu d'une rainure pour que le bras long (4) du ressort de torsion (3) ne puisse pas glisser.

9. Dispositif selon l'une des revendications précédentes, **caractérisé en ce** que le ressort de torsion (3) est maintenu au moyen d'un ancrage (11).

10. Dispositif selon l'une des revendications précédentes, **caractérisé en ce** que le dispositif (6) est se termine vers le haut par une plaque de recouvrement (7).

11. Dispositif selon l'une des revendications précédentes, **caractérisé en ce** qu'une tige de guidage (8) avec un guidage (9, 10) est prévue de chaque côté.

12. Dispositif selon la revendication 11, **caractérisé en ce** que le guidage (9) qui se trouve sur le côté de l'entraînement est réalisé comme tube de guidage avec une section circulaire tandis que le guidage (10) qui se trouve du côté du ressort de torsion (3) est réalisé comme une fente longitudinale (10).

Fig.1

Fig 2

Fig.3

EP 0 308 610 B1